# EUROPEAN PATENT APPLICATION

(11) **EP 4 832 599 A1**
(43) Date of publication of application: **28.10.2026**
(21) Application number: 25855379.1
(22) Date of filing: 28.02.2025
(51) Int. Cl.: H04W 52/02, H04W 16/32, H04W 72/0457

(54) **USER DEVICE, NODE, AND COMMUNICATION METHOD**

(71) Applicant: KYOCERA Corporation, Kyoto-shi, Kyoto 612-8501 (JP)
(72) Inventor: NITTA Shunsuke, Kyoto-shi, Kyoto 612-8501 (JP); SAHARA Tooru, Kyoto-shi, Kyoto 612-8501 (JP)
(74) Representative: TBK
(86) International application number: PCT/JP2025/007244
(87) International publication number: WO 2026/181295

(57) **Abstract**

A user equipment is configured to perform wireless communication with a master node and a secondary node by using dual connectivity in a mobile communication system, the user equipment receiving first information indicating a neighbour cell from the master node, selecting the secondary node to be activated from a sleep state based on the first information, and transmitting second information indicating a neighbour cell to be activated by the user equipment, to the master node.

## Description

### TECHNICAL FIELD

The present invention relates to a user equipment, a node, and a communication method.

### BACKGROUND OF INVENTION

As a new mode of mobile telephone lines that replaces New Radio (NR), which is a fifth generation (5G) standard established by the 3rd generation partnership project (3GPP (registered trademark), the same applies hereinafter), which is a standardization project for mobile communication systems, a device configuration known as cell-free massive Multi Input Multi Output (MIMO) has been studied. The cell-free massive MIMO is a configuration in which base stations are arranged more densely than in known configurations, and is a scheme in which both communication quality and power saving are achieved by operating only the most suitable minimum necessary base stations in accordance with a communication request from a terminal.

On the other hand, the mobile line is required to have the feature "connectable anytime, anywhere, and quickly". In view of this, even if the cell-free massive MIMO is of a scheme of operating only minimum necessary base stations, macro base stations that are always operated as in known cases to cover the entire region are expected to continue to exist in the future. It is expected that the operations of these base stations are collectively managed by a central unit (CU) in accordance with the current standard.

With the above-described situation setting, a small base station that is normally in the sleep state is activated through the following procedure. First, a terminal requests a macro station, connected to the terminal in advance, for establishment of a high-quality channel. Next, a small base station and a communication channel that are suitable for communication with the terminal are searched for. As a result of the search, a link is established between the selected small base station and the terminal. On the other hand, the small base stations other than the selected small base station transition back to the sleep state. As a result, only the selected small station is activated.

In the procedure for searching for the small base station and the communication channel suitable for communication with the terminal, although temporarily, each base station needs to be activated according to the known method (emission of a reference signal). In addition, with base stations densely arranged, reference signals may interfere with each other. Therefore, there is a demand for a technology enabling the procedure for searching for the small base station and the communication channel that are suitable for communication with the terminal to be completed in a power-saving and stable manner.

### CITATION LIST

### NON-PATENT LITERATURE

Non-Patent Document 1: 3GPP Technical Specification: TS 38.401 V18.4.0 (2024-12)

### SUMMARY

A user equipment according to a first aspect is configured to perform wireless communication with a primary node and a secondary node by using dual connectivity in a mobile communication system, the user equipment receiving first information indicating a neighbour cell from the primary node, selecting the secondary node to be activated from a sleep state based on the first information, and transmitting second information indicating a neighbour cell to be activated by the user equipment, to the primary node.

A node according to a second aspect is configured to operate in a mobile communication system in which a user equipment performs wireless communication using dual connectivity, the node transmitting first information indicating a neighbour cell to the user equipment, receiving, from the user equipment, second information indicating a neighbour cell to be activated by the user equipment, and activating the neighbour cell based on the received second information.

A communication method according to a third aspect used by a user equipment is configured to perform wireless communication with a primary node and a secondary node by using dual connectivity in a mobile communication system, the method including receiving first information indicating a neighbour cell from the primary node, selecting the secondary node to be activated from a sleep state based on the first information, and transmitting second information indicating a neighbour cell to be activated by the user equipment, to the primary node.

A communication method according to a fourth aspect is used by a node and configured to perform wireless communication with a user equipment using dual connectivity in a mobile communication system, the method including transmitting first information indicating a neighbour cell to the user equipment, receiving, from the user equipment, second information indicating a neighbour cell to be activated by the user equipment, and activating the neighbour cell based on the received second information.

### BRIEF DESCRIPTION OF THE DRAWINGS

FIG. 1 is a diagram illustrating a configuration example of a mobile communication system according to an embodiment.
FIG. 2 is a diagram illustrating a configuration example of a protocol stack of a U-plane radio interface that handles data.
FIG. 3 is a diagram illustrating a configuration example of a protocol stack of a C-plane radio interface that handles signaling (control signal).
FIG. 4 is a diagram for describing a terahertz (THz) wave cell according to the embodiment.
FIG. 5 is a diagram for describing dual connectivity (DC) according to the embodiment.
FIG. 6 is a diagram illustrating a configuration example of a radio access network (RAN) according to the embodiment.
FIG. 7 is a diagram illustrating a configuration example of a UE (user equipment) according to an embodiment.
FIG. 8 is a diagram illustrating a configuration example of a node according to the embodiment.
FIG. 9 is a diagram illustrating an exemplary system operation according to a first embodiment.
FIG. 10 is a diagram illustrating an exemplary system operation according to a first embodiment.
FIG. 11 is a diagram illustrating an example of coordinated scheduling according the first embodiment.
FIG. 12 is a diagram illustrating an example of emission time of a synchronization signal block (SSB) beam according to the first embodiment.
FIG. 13 is a diagram illustrating another example of emission time of a synchronization signal block (SSB) beam according to the first embodiment.
FIG. 14 is a diagram illustrating an exemplary system operation according to a variation of the first embodiment.
FIG. 15 is a diagram illustrating an exemplary system operation according to a variation of the first embodiment.
FIG. 16 is a diagram illustrating an exemplary system operation according to a second embodiment.
FIG. 17 is a diagram illustrating an exemplary system operation according to the second embodiment.
FIG. 18 is a diagram illustrating an exemplary system operation according to a third embodiment.
FIG. 19 is a diagram illustrating an exemplary system operation according to the third embodiment.
FIG. 20 is a diagram illustrating an exemplary system operation according to a fourth embodiment.
FIG. 21 is a diagram illustrating an exemplary system operation according to the fourth embodiment.

### DESCRIPTION OF EMBODIMENTS

A mobile communication system according to embodiments will be described below with reference to the drawings. In the description of the drawings, the same or similar parts are denoted by the same or similar reference signs.

### (1) First Embodiment

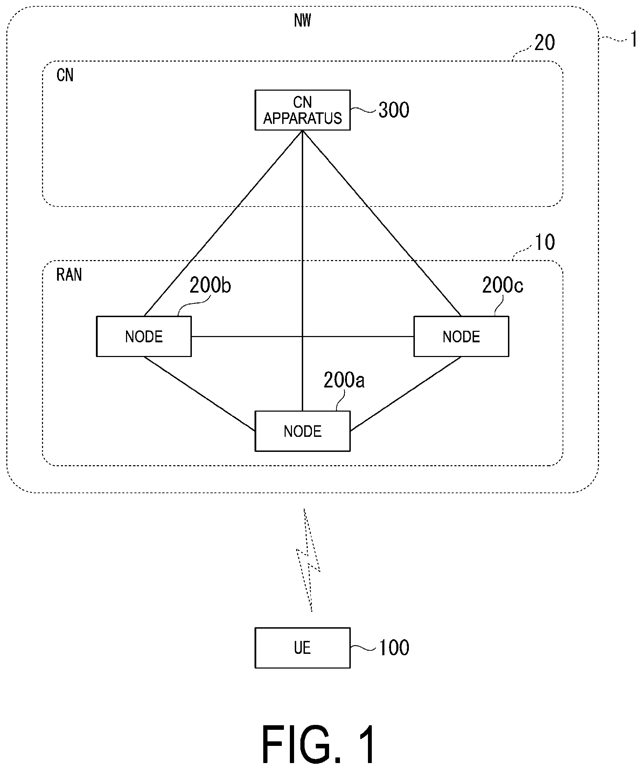

A first embodiment will be described with reference to FIGs. 1 to 15.

### (1.1) System Configuration Example

FIG. 1 is a diagram illustrating a configuration example of a mobile communication system according to an embodiment. The mobile communication system according to the embodiment is a system conforming to the 3GPP standard. For example, the mobile communication system according to the embodiment may be a 5th generation (5G) system or a 6th generation (6G) system.

The mobile communication system includes a network (NW) 1 and a user equipment (UE) 100. The UE 100 is a mobile communication apparatus and performs wireless communication with the NW 1. The UE 100 may be an apparatus used by a user and may be, for example, a mobile phone terminal (including a smartphone), a tablet terminal, a laptop personal computer (PC), a communication module (including a communication card or chipset), a sensor or an apparatus provided in a sensor, a vehicle or an apparatus provided in a vehicle (a vehicle UE), or an aircraft or an apparatus provided in an aircraft (an aerial UE).

The NW 1 includes a Radio Access Network (RAN) 10 and a Core Network (CN) 20. When the mobile communication system is a 5th Generation System (5GS), the RAN 10 is referred to as a Next Generation Radio Access Network (NG-RAN) and the CN 20 is referred to as a 5G Core Network (5GC).

The RAN 10 includes a plurality of nodes 200 (nodes 200a to 200c in the illustrated example). The nodes 200 are connected to each other via an inter-node interface. The node 200 is also referred to as a base station. The node 200 may be configured (i.e., functionally divided) into a Central Unit (CU), a Distributed Unit (DU), and a Radio Unit (RU), and these units may be connected by a fronthaul interface. When the mobile communication system is a 5GS, the node 200 is referred to as a gNB, the inter-node interface is referred to as an Xn interface, and the fronthaul interface is referred to as an F1 interface.

Each node 200 manages one or a plurality of cells. The node 200 performs wireless communication with the UE 100 that has established a connection with its own cell. Each node 200 has a Radio Resource Management (RRM) function, a routing function for user data (also simply referred to as "data"), a measurement control function for mobility control and scheduling, and the like. Note that a "cell" is used as a term indicating a minimum unit of a wireless communication area. The "cell" is also used as a term representing a function or a resource for performing wireless communication with the UE 100. One cell belongs to one carrier frequency (also simply referred to as a "frequency").

The CN 20 includes a CN apparatus 300. The CN apparatus 300 may include a control plane (C-plane) apparatus associated with the C-plane, and a user plane (U-plane) apparatus associated with the U-plane. The C-plane apparatus performs various mobility control, paging, and the like for the UE 100. The C-plane apparatus communicates with the UE 100 using Non-Access Stratum (NAS) signaling. The U-plane apparatus controls data transfer. When the mobile communication system is a 5GS, the C-plane apparatus is referred to as an Access and Mobility Management Function (AMF), the U-plane apparatus is referred to as a User Plane Function (UPF), and the interface between the node 200 and the CN apparatus 300 is referred to as an NG interface.

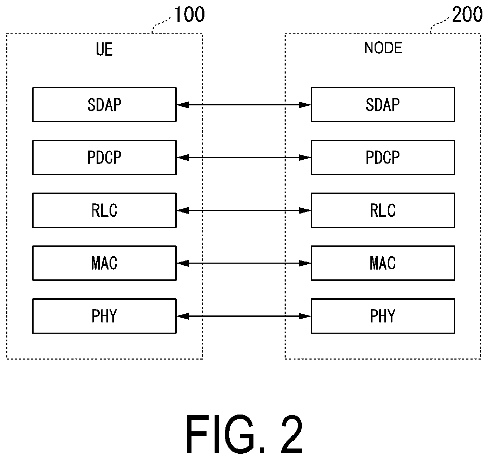

FIG. 2 is a diagram illustrating a configuration example of a protocol stack of a U-plane radio interface that handles data.

The protocol of the U-plane radio interface includes, for example, a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs encoding/decoding, modulation/demodulation, antenna mapping/demapping, and resource mapping/demapping. Data and control information are transmitted between the PHY layer of the UE 100 and the PHY layer of the node 200 via a physical channel. Note that the PHY layer of the UE 100 receives Downlink Control Information (DCI) transmitted from the node 200 on a Physical Downlink Control Channel (PDCCH). Specifically, the UE 100 performs blind decoding of the PDCCH by using a radio network temporary identifier (RNTI) and acquires a successfully decoded DCI as a DCI addressed to the UE. The DCI transmitted from the node 200 has CRC parity bits scrambled by the RNTI added thereto.

The MAC layer performs data priority control and retransmission processing using Hybrid ARQ (HARQ), and the like. Data and control information are transmitted between the MAC layer of UE 100 and the MAC layer of node 200 via a transport channel. The MAC layer of the node 200 includes a scheduler. The scheduler determines the uplink and downlink transport format (a transport block size and a Modulation and Coding Scheme (MCS)) and the resources to be allocated to the UE 100.

The RLC layer transmits data to the RLC layer on the reception side by using functions of the MAC layer and the PHY layer. Data and control information are transmitted between the RLC layer of the UE 100 and the RLC layer of the node 200 via a logical channel.

The PDCP layer performs header compression/decompression, encryption/decoding, and the like.

The SDAP layer performs mapping between an IP flow, which is a unit for QoS control by the CN 20, and a radio bearer, which is a unit for QoS control by an Access Stratum (AS). When the RAN is connected to an Evolved Packet Core (EPC), SDAP may be omitted.

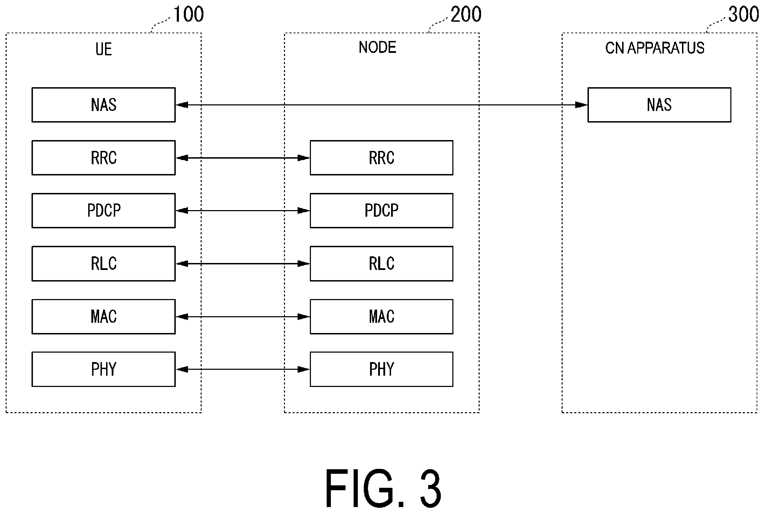

FIG. 3 is a diagram illustrating a configuration example of a protocol stack of a C-plane radio interface that handles signaling (control signal).

The protocol stack of the C-plane radio interface includes, for example, a Radio Resource Control (RRC) layer and a Non-Access Stratum (NAS) layer instead of the SDAP layer illustrated in FIG. 2.

RRC signaling for various configuration is transmitted between the RRC layer of the UE 100 and the RRC layer of the node 200. The RRC layer controls a logical channel, a transport channel, and a physical channel according to establishment, re-establishment, and release of a radio bearer. When there is a connection (RRC connection) between the RRC of the UE 100 and the RRC of the node 200, the UE 100 is in an RRC connected state. When there is no connection (RRC connection) between the RRC of the UE 100 and the RRC of the node 200, the UE 100 is in an RRC idle state. When the connection between the RRC of the UE 100 and the RRC of the node 200 is suspended, the UE 100 is in an RRC inactive state.

The NAS layer (also simply referred to as "NAS"), which is located above the RRC layer, performs session management, mobility management, and the like. NAS signaling is transmitted between the NAS layer of the UE 100 and the NAS layer of the CN apparatus 300. The UE 100 includes an application layer and the like other than the protocol of the radio interface. The layer below the NAS layer is referred to as an AS layer (also simply referred to as "AS").

### (1.2) DC Using Terahertz Wave Cell

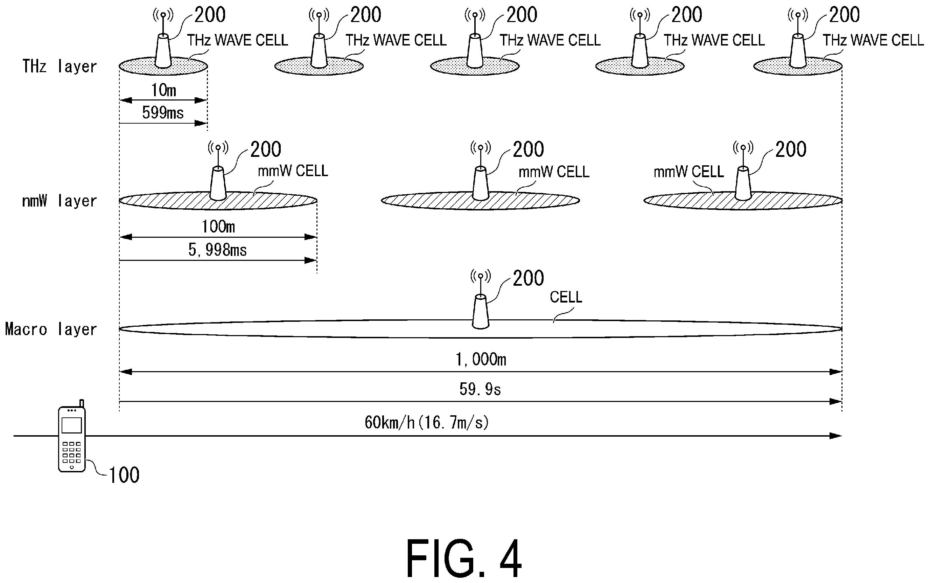

FIG. 4 is a diagram for describing a terahertz (THz) wave cell according to the embodiment.

The mobile communication system according to the embodiment may be a 6G system. 6G is assumed to utilize terahertz (THz) waves. A cell operated by THz waves is referred to as a THz wave cell. Compared with millimeter waves (mmW), THz waves have a stronger tendency to have a straighter direction of travel, have a higher free space loss, and are more susceptible to the effects of the atmosphere and precipitation. Therefore, the THz wave cell can be an extremely small cell.

In the illustrated example, the diameter of the coverage area of the THz wave cell is approximately 10 m, the diameter of the coverage area of the mmW cell operated at mmW is approximately 100 m, and the diameter of the coverage area of the macro cell is approximately 1000 m. Under such assumptions, for example, the UE 100 moving at 60 [km/h] passes through the coverage area of each THz wave cell in about 599 [ms].

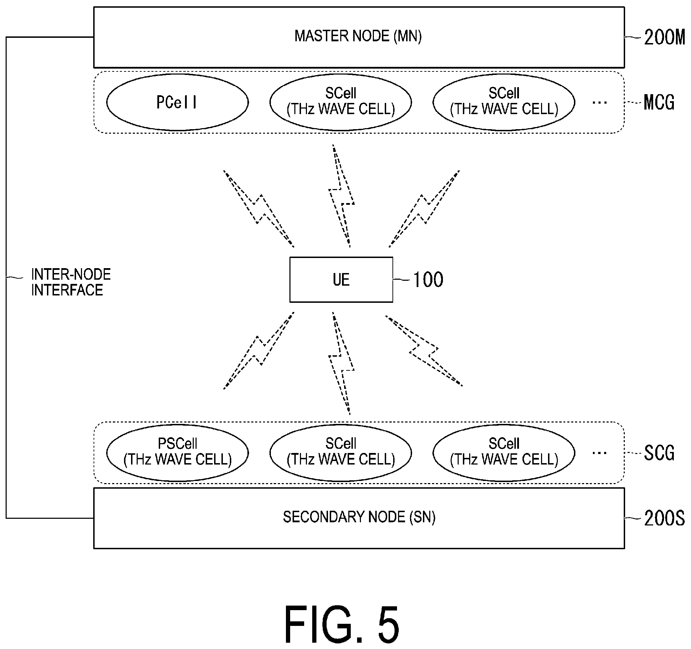

Dual connectivity (DC) is one method for stably controlling small cells in a mobile communication system. FIG. 5 is a diagram for describing dual connectivity (DC) according to the embodiment. In the embodiment, it is assumed that the THz wave cell is used as a cell of a secondary cell group (SCG). The THz wave cell may be used as a secondary cell (SCell) of a master cell group (MCG). However, instead of the THz wave cell, a mmW cell may be used.

DC may be configured in the UE 100 in the RRC connected state. In the DC, the UE 100 performs wireless communication with a master cell group (MCG) managed by a master node (MN) 200M and a secondary cell group (SCG) managed by a secondary node (SN). The MN 200M and the SN 200S are connected to each other via an inter-node interface. When not being distinguished, the MN 200M and the SN 200S are simply referred to as the node 200. When being a 5G/NR node, the MN 200M is also referred to as a master gNB (MgNB). When being a 5G/NR node, the SN 200M is also referred to as a secondary gNB (SgNB).

For example, the MN 200M transmits a predetermined message (for example, an SN Addition Request message) to the SN 200S, and the MN 200M transmits an RRC Reconfiguration message to the UE 100, so that an SCG is configured in the UE 100 and DC is started. In DC, a radio resource is allocated to the UE 100 in the RRC connected state from the scheduler of each of the MN 200M and the SN 200S, and the UE 100 performs wireless communication by using the radio resource of the MN 200M and the radio resource of the SN 200S.

The MN 200M may have a control plane connection with the CN 20. The MN 200M provides a main radio resource for the UE 100. The MN 200M manages an MCG, which is a group of serving cells associated with the MN 200M. An MCG has a primary cell (PCell) and optionally one or more secondary cells (SCells). On the other hand, the SN 200S need not have a control plane connection with the CN 20. The SN 200S provides an additional radio resource to the UE 100. The SN 200S manages an SCG, which is a group of serving cells associated with the SN 200S. An SCG has a primary secondary cell (PSCell) and optionally one or more SCells. Note that the PCell of the MCG and the PSCell of the SCG are sometimes referred to as special cells (SpCells).

The mobile communication system supports activation and deactivation of the SCG to enable reduction of power consumption of the UE 100 in which DC is configured. Activation/deactivation of the SCG can be instructed by using an RRC Reconfiguration message from the MN 200M to the UE 100. While the SCG is deactivated, all SCG SCells are in the inactive state. While the SCG is deactivated, the UE 100 does not need to transmit a physical uplink shared channel (PUSCH), a sounding reference signal (SRS), and a channel quality indicator (CSI) report on the SCG, and while the SCG is deactivated, the UE 100 does not need to monitor a physical downlink control channel (PDCCH) or receive a downlink shared channel (DL-SCH) on the SCG. However, the UE 100 can continue radio link monitoring (RLM) and measurement reporting for the PSCell. When activating the SCG, the UE 100 can skip a random access procedure if timing advance (TA) with the PSCell is valid.

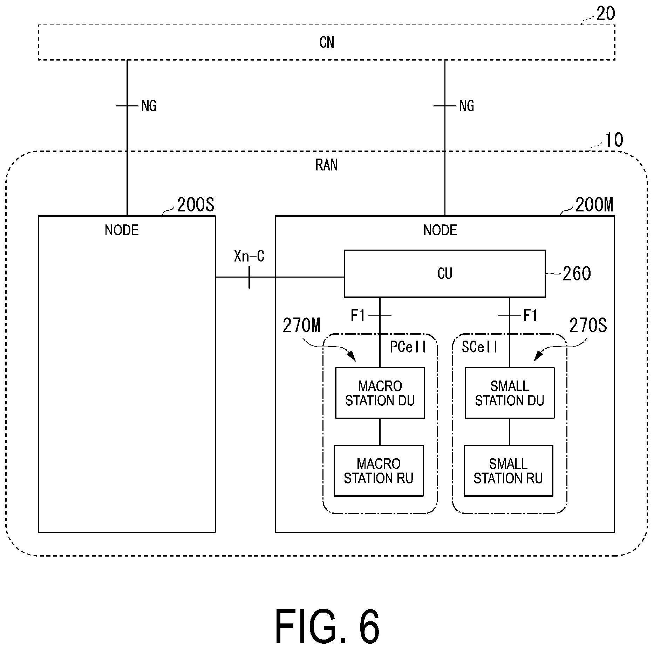

FIG. 6 is a diagram illustrating a configuration example of the RAN 10 according to the present embodiment. The RAN 10 includes MNs 200M as the plurality of nodes 200 and one or more SNs 200S. Note that only one of the one or more SNs 200S is illustrated in FIG. 6. The MN 200M includes a CU 260, a macro station 270M, and a small station 270S. The macro station 270M in the MN 200M includes a macro station DU and a macro station RU. The macro station 270M in the MN 200M manages the PCell of the MCG. The small station 270S in the MN 200M includes a small station DU and a small station RU. The small station 270S in the MN 200M manages the SCell of the MCG.

Each of the one or more SN 200S includes the CU 260 and the small station 270S (neither is illustrated). The small station 270S in the SN 200S includes the small station DU and the small station RU. The small station 270S in the SN 200S manages the PSCell and the SCell of the SCG. Note that in the DC, when the UE 100 is connected to the SCG, the UE 100 is connected to at least the PSCell. When connecting to the SCG, the UE 100 may connect to the SCell of the SCG as well as the PSCell.

In the DC according to the present embodiment, the UE 100 performs wireless communication with the PCell of the MCG managed by the macro station DU connected to the CU 260 in the MN 200M, and the PSCell or SCell of the SCG managed by the small station DU in the SN 200S. That is, the DC is performed using the PCell in the MCG and the PSCell or the SCell in the SCG.

### (1.3) Configuration Example of User Equipment

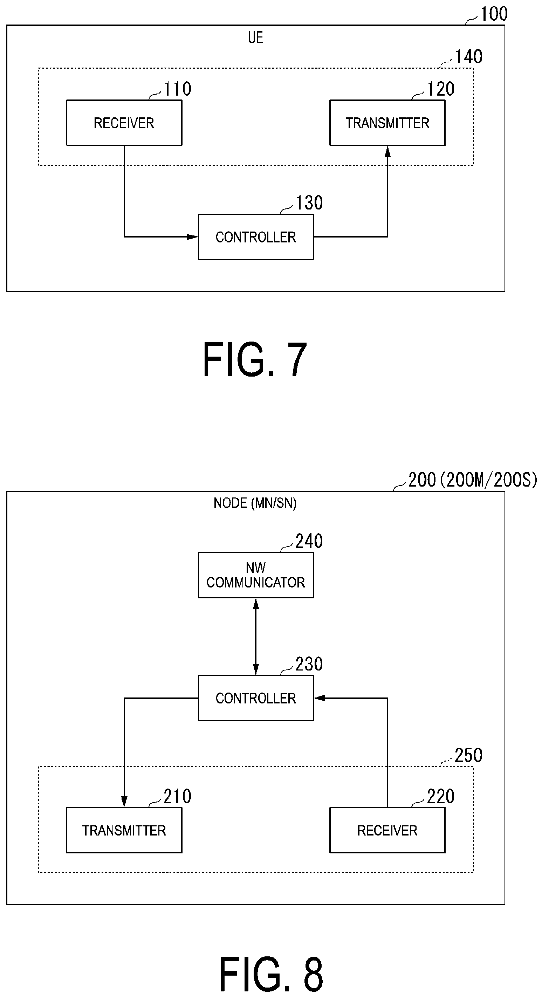

FIG. 7 is a diagram illustrating a configuration example of a UE 100 (user equipment) according to the embodiment.

The UE 100 includes a receiver 110, a transmitter 120, and a controller 130. The receiver 110 and the transmitter 120 constitute a wireless communicator 140 that performs wireless communication with the node 200.

The receiver 110 performs various receptions under the control of the controller 130. The receiver 110 includes an antenna and a reception device. The reception device converts a radio signal or a terahertz wave signal received through the antenna into a baseband signal (a reception signal) and outputs the resulting signal to the controller 130. The transmitter 120 performs various transmissions under the control of the controller 130. The transmitter 120 includes an antenna and a transmission device. The transmission device converts a baseband signal (a transmission signal) output by the controller 130 into a radio signal or a terahertz wave signal and transmits the resulting signal through the antenna.

The controller 130 performs various controls and processes in the UE 100. The operations of the UE 100 described above and below may be operations under the control of a controller 230. The controller 130 includes at least one processor and at least one memory. The memory stores a program to be executed by the processor and information to be used for processing in the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing.

### (1.4) Configuration Example of Node

FIG. 8 is a diagram illustrating a configuration example of a node 200 (base station) according to the embodiment. The node 200 may be the MN 200M or the SN 200S.

The node 200 includes a transmitter 210, a receiver 220, the controller 230, and a NW communicator 240. The transmitter 210 and the receiver 220 constitute a wireless communicator 250 that performs wireless communication with the UE 100.

The transmitter 210 performs various transmissions under the control of the controller 230. The transmitter 210 includes an antenna and a transmission device. The transmission device converts a baseband signal (a transmission signal) output by the controller 230 into a radio signal or a terahertz wave signal and transmits the resulting signal through the antenna. The receiver 220 performs various types of reception under control of the controller 230. The receiver 220 includes an antenna and a reception device. The reception device converts a radio signal or a terahertz wave signal received through the antenna into a baseband signal (a reception signal) and outputs the resulting signal to the controller 230.

The controller 230 performs various types of control and processing in the node 200. The operations of the node 200 described above and below may be operations under control of the controller 230. The controller 230 includes at least one processor and at least one memory. The memory stores a program to be executed by the processor and information to be used for processing in the processor. The processor may include a baseband processor and a CPU. The baseband processor performs modulation and demodulation, coding and decoding, and the like of a baseband signal. The CPU executes the program stored in the memory to thereby perform various types of processing.

The NW communicator 240 is connected to adjacent nodes via an inter-node interface. The NW communicator 240 is connected to the CN apparatus 300 via a node-CN interface.

A node 200M thus configured is a network node including a central unit and a plurality of distributed units. The central unit transmits the transmission timing of a synchronization signal block to a second distributed unit. The CU 260 is an example of a central unit. The macro station 270M and the small station 270S are examples of the plurality of distributed units. The small station 270S is an example of the second distributed unit.

With the above configuration, the node 200M can transmit the transmission timing of the synchronizing signal block to the second distributed unit, and therefore, the procedure for searching for the small station 270S and a communication channel suitable for communication with the UE 100 can be completed in a power-saving and stable manner.

The mobile communication system according to the present embodiment is a mobile communication system including a central unit and a plurality of distributed units. The CU 260 is a central unit in the mobile communication system including the central unit and the plurality of distributed units.

The small station 270S is a distributed unit in the mobile communication system including the central unit and the plurality of distributed units. The small station 270S receives the transmission timing of the synchronization signal block (SSB) from the central unit. The small station 270S transmits the SSB based on the transmission timing of the SSB.

### (1.5) Exemplary System Operation

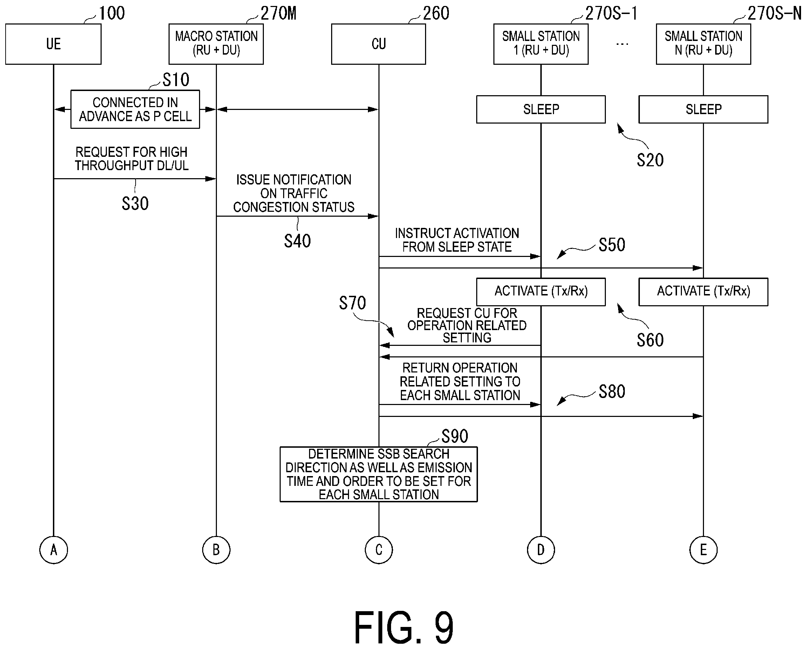

FIG. 9 is a diagram illustrating an exemplary system operation according to the first embodiment. The CU 260 illustrated in FIG. 9 is the CU 260 in the SN 200S. In FIG. 9, the CU 260 in the MN 200M is omitted. The macro station 270M illustrated in FIG. 9 is the macro station 270M in the MN 200M. In the DC, when the CU 260 in the SN 200S and the macro station 270M in the MN 200M communicate with each other, the communication is performed via the CU 260 in the MN 200M. The small station 270S illustrated in FIG. 9 is the small station 270S in the SN 200S.
In the system operation according to the first embodiment, the CU 260 in the SN 200S transmits the transmission timing of the SSB to each of the plurality of small stations 270S in the SN 200S.

In the following description, the CU 260 in the SN 200S is simply referred to as "CU 260". The small station 270S in the SN 200S is simply referred to as "small station 270S". The macro station 270M in the MN 200M is simply referred to as "macro station 270M". Also, in the following description, "small station 270S" is any one of a small station 270S-1 to a small station 270S-N. The "plurality of small stations 270S" are any two or more of the small station 270S-1 to the small station 270S-N.

In step S10, the UE 100 is connected in advance to the PCell of the macro station 270M.

In step S20, the small station 270S-1 to the small station 270S-N are each in a sleep state.

In step S30, the UE 100 transmits a request for the radio-quality condition to the macro station 270M. The UE 100 transmits the request included in the UCI transmitted on the PUCCH. Note that the UE 100 may transmit the request included in a PDCP Control PDU, an RRC message, or the like. The radio-quality condition includes, for example, data transmission and reception with high throughput in each of the UL and the DL. The macro station 270M receives the request for the radio-quality condition from the UE 100. The request for the radio-quality condition is an example of a notification transmitted from the UE 100 to the macro station 270M. Thus, the UE 100 transmits the notification to the master node.

In step S40, the macro station 270M transmits a message as a notification indicating the traffic congestion status to the CU 260. The macro station 270M transmits, for example, the traffic congestion status included a Resource Status Request message, to the CU 260. Therefore, the macro station 270M constituting the PCell notifies the CU 260 of the information indicating the radio resource usage status. The CU 260 receives the message as the notification indicating the traffic congestion status from the macro station 270M.

In step S50, the CU 260 instructs the small station 270S to be activated from the sleep state. Accordingly, the CU 260 that has received the information indicating the radio resource usage status instructs a plurality of small stations 270S in the vicinity of the UE 100 to be activated from the sleep state. The CU 260 selects a small station 270S located in a certain range based on the location information of UE 100. The CU 260 instructs the selected small station 270S, among the small stations 270S, to be activated from the sleep state. The selected small station 270S receives the instruction for the activation from the sleep state from the CU 260. Note that in FIG. 9, the small station 270S-1 to the small station 270S-N are illustrated as the small stations 270S selected by the CU 260 as the small stations 270S located in the certain range.

The details of the processing of selecting the small station 270S instructed by the CU 260 to be activated from the sleep state based on the location information of the UE 100 will be described in detail below. For example, the CU 260 first selects the small station 270S at a short distance from the UE 100. In this case, the CU 260 may select a small station 270S at a predetermined distance or less from the UE 100. Also, the CU 260 may select a predetermined number of small stations 270S in ascending order of distance from the UE 100 from among the small stations 270S.

The CU 260 selects a set of small stations 270S that are unlikely to interfere with each other in the SSB search in step S120, which will be described below, from among small station 270S at short distances from the UE 100. The interference less likely to occur in the SSB search means that a Synchronization Signal-Signal-to-Interference Ratio (SS-SIR) of a synchronous signal received by the UE 100 in the SSB search is less likely to deteriorate. For example, the CU 260 selects the small stations 270S using different frequency bands, from among the small stations 270S at short distances from the UE 100. The frequency band used is a frequency band of a cell used by the small station 270S as the PSCell or the SCell of the SCG. However, when interferences between SSBs can be avoided by interference-avoidance processing for the SSB search described below, the small stations 270S using the same frequency band may be selected from among the small stations 270S at short distances from the UE 100.

The CU 260 recognizes the current position of the UE 100 based on a known technique. The CU 260 recognizes the current position of the UE 100 based on, for example, Minimalization of Drive tests (MDT), Timing Advance, Proximity Indication, or the like.

The UE 100 may notify the CU 260 of the processing capability of the UE 100 may be notified in advance via the macro station 270M. In this case, the CU 260 may limit the number of small stations 270S to be selected as the target of the instruction for activation from the sleep state, according to the processing capacity of the UE 100.

In step S60, both the DU and the RU are activated in each of the small station 270S-1 to the small station 270S-N that have received the instruction for activation from the sleep state. The RU activates the transmission device and the reception device.

In step S70, each of the small station 270S-1 to the small station 270S-N transmits a request for operation-related settings to the CU 260. Each of the small station 270S-1 to the small station 270S-N transmits the request, for example, included in an F1 SETUP REQUEST message.

In step S80, the CU 260 transmits the operation related setting to each of the small station 270S-1 to the small station 270S-N. The CU 260 transmits the settings, for example, included in an F1 SETUP RESPONSE message.

In step S90, the CU 260 determines the SSB setting for each of the small station 270S-1 to the small station 270S-N. The SSB setting includes an activated SSB list and an SSB time order list.

The activated SSB list is beam information indicating an SSB beam for transmitting the SSB. The activated SSB list includes an SSB index. The SSB index is an identifier indicating an SSB beam requested to be activated. The SSB search direction is designated by the SSB index.

The SSB time order list indicates transmission timing of the SSB. The SSB time order list indicates a time at which the SSB beam starts to be emitted and the order of the SSB beam emission. Therefore, in the present embodiment, the transmission timing of the SSB is indicated by the time at which the transmission of the SSB to be transmitted first among the plurality of SSBs is started and the order of the transmission of the plurality of SSBs. The CU 260 determines the emission start time of the SSB beam and the emission order of the SSB beam so that the SSBs of adjacent small stations 270S do not interfere with each other, and the SS-SIR of the synchronous signal received by the UE 100 in the SSB search is not reduced. Determining the emission start time of the SSB beam and the order of emission of the SSB beam so that the SSBs for adjacent small stations 270S do not interfere with each other is referred to as coordinated scheduling. The coordinated scheduling will be described in detail below.

In step S100, the CU 260 transmits the SSB setting determined in step S90 to each of the small station 270S-1 to the small station 270S-N. Accordingly, the CU 260 transmits the transmission timing of the SSB to each of the plurality of small stations 270S. The CU 260 transmits the SSB setting included in, for example, a gNB-CU CONFIGURATION UPDATE message. Each of the small station 270S-1 to the small station 270S-N receives the SSB setting. When the activated SSB list is included in the received SSB setting, a small station 270S-i activates only the SSB beams indicated by the SSB index included in the activated SSB list.

As described above, in the present embodiment, the beam information (the activated SSB list for example) indicating the SSB beam for transmitting the SSB is designated separately from the transmission timing of the SSB (the SSB time order list for example). The CU 260 transmits the beam information to the small station 270S together with the transmission timing of the SSB. Note that the beam information and the transmission timing of the SSB may be designated as one information. For example, since the SSB time order list designates the transmission sequence of the plurality of SSBs, the SSB time order list includes information of the SSB beams to be transmitted. Therefore, the beam information indicating the SSB beam and the transmission timing of the SSB may be designated by the SSB time order list. In this case, the activated SSB list is omitted from the SSB setting.

In step S110, each of the small station 270S-1 to the small station 270S-N transmits, to the CU 260, a message indicating that the SSB beam indicated by the SSB index indicated by the SSB setting has been activated. Each of the small station 270S-1 to the small station 270S-N transmits the message, for example, included in gNB-CU CONFIGURATION UPDATE ACKNOWLEDGE.

In step S120, the UE 100 performs the SSB search. Each of the small station 270S-1 to the small station 270S-N emits the SSB beam based on the time and order indicated by the SSB setting received from the CU 260 in step S100. Thus, a plurality of the small stations 270S activated from the sleep state transmit the SSB based on the transmission timing of the SSB. Here, the small station 270S transmits the SSB based on the transmission timing of the SSB via the activated SSB beam among the SSB beams indicated by the beam information. The SSB includes, for example, a primary synchronization signal (PSS), a secondary synchronization signal (SSS), and a master information block (MIB).

The UE 100 receives the SSB from each of the small station 270S-1 to the small station 270S-N. The UE 100 measures Reference Signal Received Quality (RSRQ) of the synchronous signal included in each SSB. The UE 100 selects the SSB achieving the highest measured RSRP from among the received SSBs. The UE 100 determines, as the optimal PSCell or SCell, the small station 270S indicated by the physical cell ID (Physical Cell Identity: PCI) detected based on the combination of the PSS and the SSS included in the selected SSB. Hereinafter, an example of a case will be described where the UE 100 determines that the small station 270S-1 is the optimal PSCell or SCell among the small station 270S-1 to the small station 270S-N. Note that even when the UE 100 receives a plurality of beams, the processing of measuring the RSRQ can be executed in parallel as long as the frequency bands of the plurality of beams are different from each other. Note that the optimal PSCell or SCell is a PSCell or SCell suitable for communication with the UE 100.

In Step S130, the UE 100 determines that the small station 270S-1 is the optimal PSCell or SCell, and transmits a physical random access channel (PRACH) to the small station 270S-1. The small station 2705-1 receives the PRACH from the UE 100. Upon receiving the PRACH, the small station 270S-1 transmits a random-access response to the UE 100.

In step S140, the UE 100 connects to the small station 270S-1, using the cell of the small station 270S-1 as the PSCell or the SCell. The UE 100 transmits an RRC Connection Request message to the small station 270S-1. The small station 270S-1 transmits an RRC connection message to the UE 100. Thus, at least one (small station 270S-1) of the plurality of small stations 270S receives the PRACH from UE 100 and establishes a connection with UE 100.

In step S150, the CU 260 instructs the small station 270S (the small station 270S-2 to the small station 270S-N) to which the UE 100 is not connected in step S140 to transition to the sleep state. Accordingly, the CU 260 instructs the small station 270S that has not established the connection with the UE 100, among the plurality of small station 270S, to transition to the sleep state. Each of the small station 270S-2 to the small station 270S-N receives a sleep instruction from the CU 260.

In step S160, upon receiving the sleep instruction, each of the small station 270S-2 to the small station 270S-N transitions to the sleep state again. The small station 270S-2 to the small station 270S-N each deactivate the transmission device and the reception device.

In step S170, the small station 270S-1 transmits and receives data to and from the UE 100 with high throughput in each of the UL and the DL. Here, the processing in step S170 includes, for example, the following processing. The small station 270S-1 transmits a SRS resource setting to the UE 100. The small station 270S-1 transmits a channel status information reference signal (CSI-RS) to the UE 100. The UE 100 measures the resource of the CSI-RS, and calculates a precoder used for transmitting the SRS based on the measurement of the CSI-RS resource. The UE 100 transmits the SRS to the small station 270S-1, with the calculated precoder applied. The small station 270S-1 determines one or a plurality of SRS resource indicators (SRIs) corresponding to a precoder to be used for transmitting the PUSCH, based on the received SRS. The small station 270S-1 transmits the determined one or a plurality of SRIs to the UE 100. The UE 100 transmits the PUSCH to the small station 270S-1 using the same antenna port as the antenna port for the SRS.

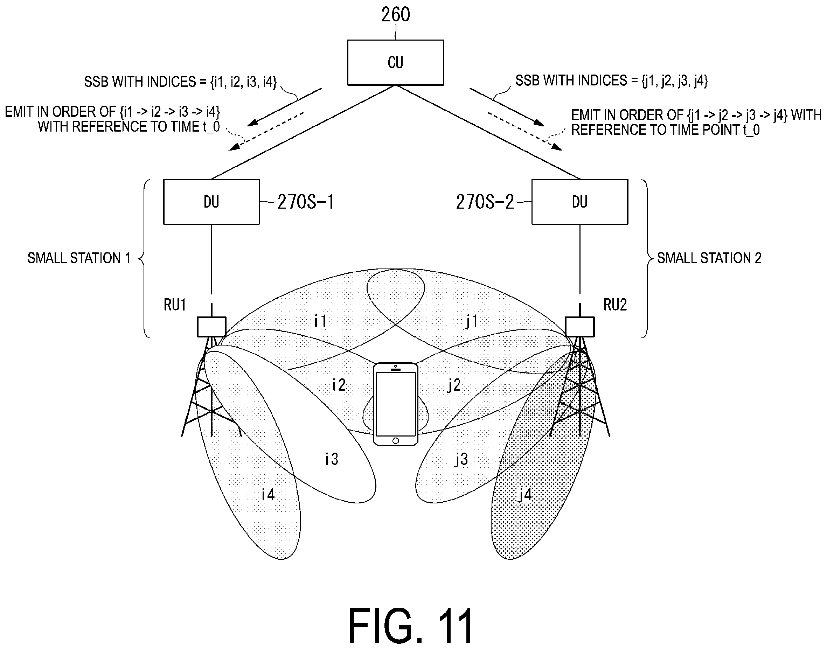

Now, the coordinated scheduling will be described in detail. FIG. 11 is a diagram illustrating an example of coordinated scheduling according the present embodiment. In the illustrated example, the small station 270S-1 and the small station 270S-2 are adjacent to each other, and use the same frequency band.

The SSB index designates a synchronization signal block beam SSB beam) that is a beam for transmitting the SSB. It is assumed that an SSB with an SSB index of "i1" emitted by the small station 270S-1 and an SSB with an SSB index of "j1" emitted by the small station 270S-2 are likely to interfere with each other when emitted simultaneously. Similarly, it is assumed that an SSB with an SSB index of "i2" and an SSB with an SSB index of "j2", an SSB with an SSB index of "i3" and an SSB with an SSB index of "j3", and an SSB with an SSB index of "i4" and an SSB with an SSB index of "j4" are likely to interfere with each other as a result of the simultaneous emission. It is assumed that interference is less to occur with combinations, other than the above, of the SSB index corresponding to the emission by the small station 270S-1 and the SSB index corresponding to the emission by the small station 270S-2 are emission simultaneously.

The direction in which the SSB beam is emitted is determined in advance for each base station. The CU 260 knows in advance the small stations involving interference between the SSB beams simultaneously emitted.

In the present embodiment, the order of the SSBs emitted by the small station 270S-1 and the order of the SSBs emitted by the small station 270S-2 are set as the following respective orders. Thus, even if the small station 270S-1 and the small station 270S-2 use the same frequency band, interference between SSBs emitted by the small station 270S-1 and the small station 270S-2 can be avoided.

The CU 260 sets "i1, i2, i3, i4" as the SSB indices for the small station 270S-1. In addition, the CU 260 sets the emission start time of the SSB beam to time t0 in the SSB time order list for the small station 270S-1, and sets the order of emission of the SSB beam based on the SSB indices "i1, i2, i3, and i4". According to the SSB time order list, the SSB beam is set to be emitted in the order of "i1, i2, i3, i4" at a predetermined period based on the time t0. The time t0 is selected by the CU 260 from among predetermined transmission times based on the transmission period of the SSB, for example. The transmission period of the SSB is set by a communication carrier when the base station is installed. The time t0 may be designated by the CU 260 instead of being selected from the predetermined transmission times.

On the other hand, the CU 260 sets "j1, j2, j3, j4" as the SSB indices for the small station 270S-2. In addition, the CU 260 sets the emission start time of the SSB beam to time t0 in the SSB time order list for the small station 270S-2, and sets the order of emission of the SSB beam based on the SSB indices "j3, j4, j1, and j2". According to the SSB time order list, the SSB beam is set to be emitted in the order of "j3, j4, j1, j2" at a predetermined period based on the time t0.

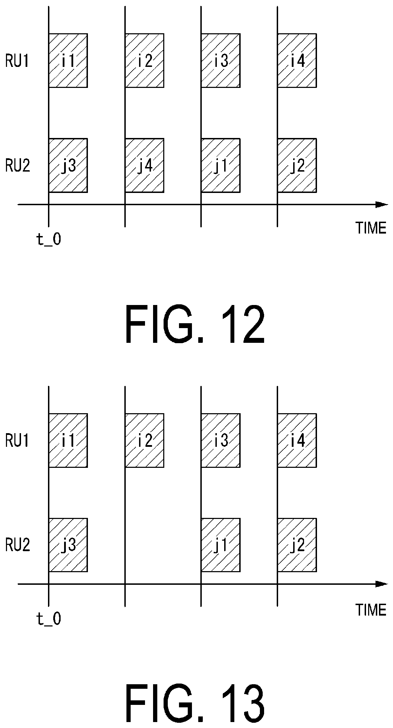

FIG. 12 illustrates the emission time of the SSB beams emitted from each of the RU of the small station 270S-1 and the RU of the small station 270S-2 when the emission start time and the emission order of the SSB beam are set as described above.

Note that, the small station 270S may not activate, in response to the SSB index designated by the CU 260, all SSB beams designated by this SSB index. That is, there may be an SSB beam that is not activated among the SSB beams designated by the SSB index. When the DU does not activate the SSB beam designated by the SSB index, for example, the RU may be under failure. As another example, the DU may know the location of the UE 100 in more detail and determine that there is no need to emit the SSB beam in directions other than the direction of the UE 100.

For example, when the SSB indices "j1, j2, j3, j4" are designated, the small station 270S-2 may emit only the SSB beam indicated by the SSB indices "j1, j2, j3". That is, the SSB beam of the SSB index "j4" is not emitted. FIG. 13 illustrates the emission time of the SSB beam emitted from each of the RU of the small station 270S-1 and the RU of the small station 270S-2 in this case. Even when the DU does not activate the SSB beam designated by the SSB index, in order to avoid interference between SSB beams, it is preferable not to provide the SSB index in the section of the SSB index "j4" in which the SSB beam is not actually emitted. When the emission is performed for the SSB indices "j1" and "j2" with the section for the SSB index "j4" omitted, the cooperation is ruined, and the SSBs are likely to interfere.

Note that, when the order of SSB beam emission is not set based on the coordinated scheduling, and the times at which SSBs are emitted are set so that the small station 270S-1 and the small station 270S-2 do not emit the SSB at the same time, the SSB search takes more time than in a case where SSBs are emitted at the same time. For example, when the small station 270S-2 emits four SSB beams after the small station 270S-1 emits four SSB beams, it takes more time than the SSB search based on the coordinated scheduling. Note that it suffices if the small station 270S-1 and the small station 270S-2 are set to emit at least one set of SSBs at the same time. The remaining SSBs may be emitted at different times from the small station 270S-1 and the small station 270S-2.

The number of SSBs and the transmission period of the SSB are set by a communication carrier when the base station is installed. In the present embodiment, the number of SSBs is four as described above. The transmission period is selected from, for example, 5 ms, 10 ms, 20 ms, 40 ms, 80 ms, and 160 ms.

In the coordinated scheduling, the order of emission of the SSB beams described above is an example, and any order may be used as long as the interference is avoided. While a case has been described above where the number of small station 270S is two, the order of emission of SSB beams may be any order as long as the interferences are avoided also when the number of small station 270S is three or more.

As described above, in the coordinated scheduling, when instructing each of a plurality of small stations 270S with the same frequency band to be activated from the sleep state, the CU 260 transmits, to each of the plurality of small stations 270S, transmission timings at which SSB beams for transmitting SSBs from the plurality of small stations 270S do not interfere with each other. With this configuration, the UE 100 can perform the SSB search in a shorter time than in a case where the coordinated scheduling is not performed.

Note that in the present embodiment, the description is given on an example of a case where the transmission timing of the SSB is indicated by the time (the emission start time of the SSB beam) at which the transmission of the SSB to be transmitted first among the plurality of SSBs is started and the order of the transmission of the plurality of SSBs, this is not construed in a limiting sense. Although an example of a case where the emission start time and the emission order of the SSB beam are set is described, this is not construed in a limiting sense. The SSB transmission timing of the may be indicated only by the SSB transmission order. In this case, the emission start time of the SSB beam is set in advance together with the transmission period of the SSB and the like by a communication carrier when the base station is installed. Therefore, the transmission timing of the SSB is indicated at least by the SSB transmission order. Note that the emission time of the SSB beam may be designated as the SSB transmission timing.

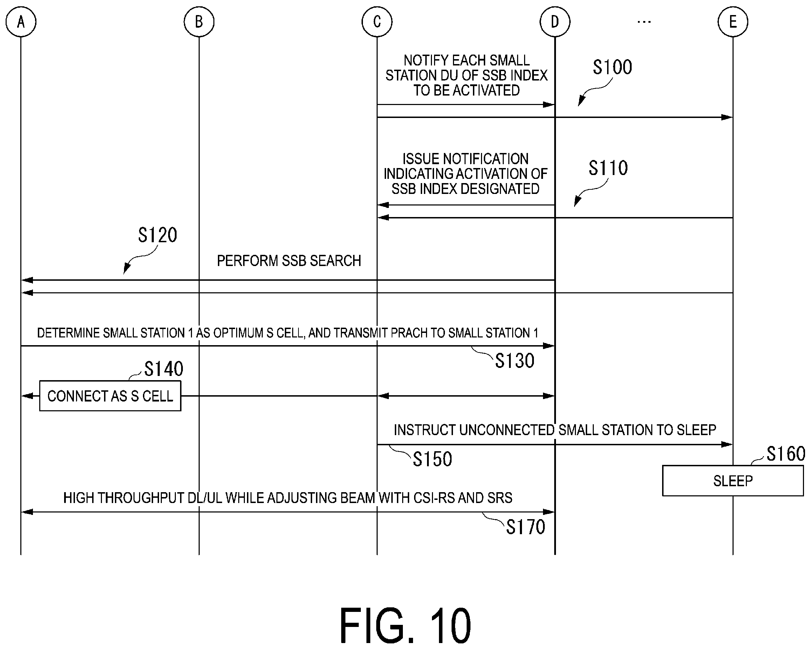

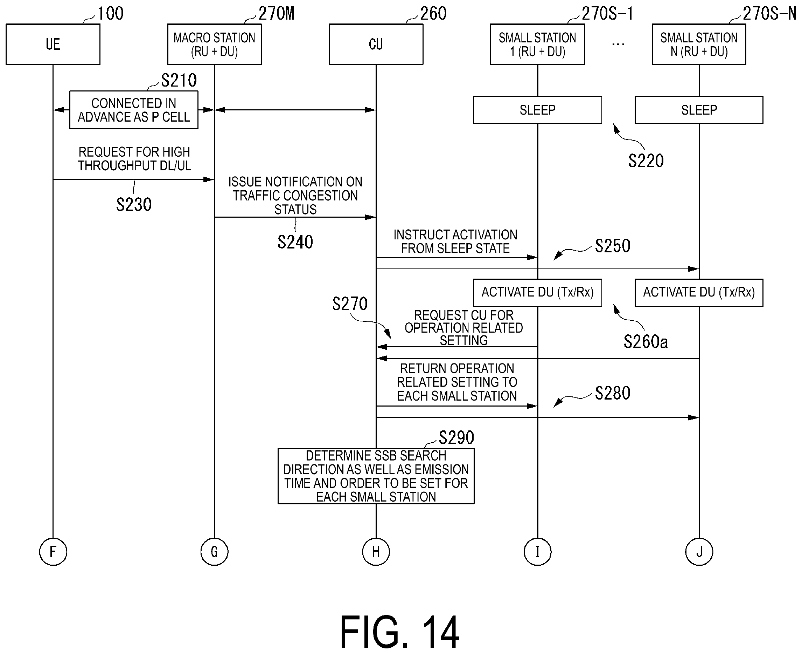

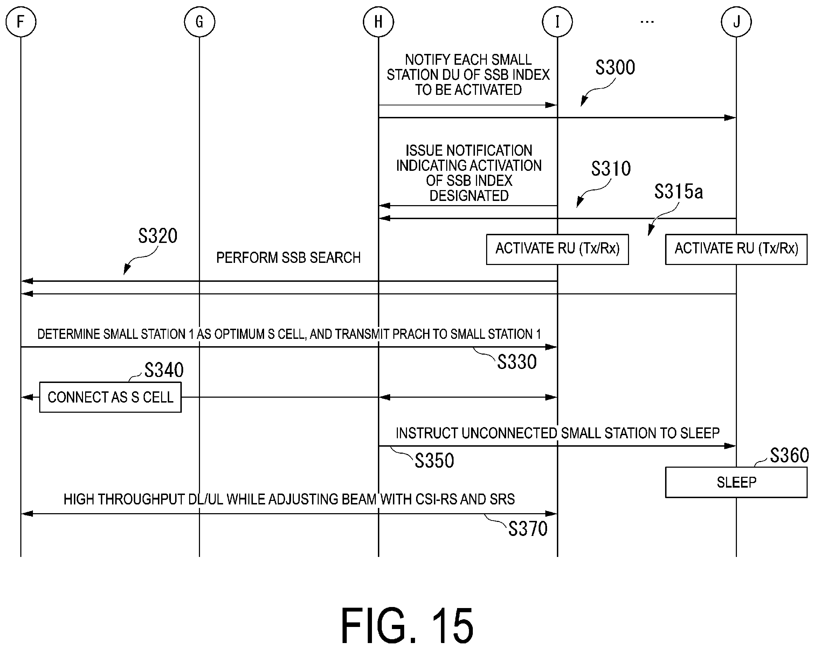

(1.6) Exemplary system operation according to variation of first embodiment An exemplary system operation according to a variation of the first embodiment will be described with reference to FIGs. 14 and 15, focusing mainly on the differences from the first embodiment. In the first embodiment described above, a case is described where both the DU and the RU are activated in the small station 270S instructed to be activated from the sleep state. In the exemplary system operation according to the variation of the first embodiment, a case where the time at which the RU is activated is different from the time at which the DU is activated will be described. Note that the processes of step S210 to step S250, step S270 to step S310, and step S320 to step S370 are similar to the processes of step S10 to step S50, step S70 to step S110, and step S120 to step S170 in FIG. 9 and FIG. 10, and therefore descriptions thereof will be omitted.

In step S260a, the DU is activated in each of the small station 270S-1 to the small station 270S-N that have received the instruction for activation from the sleep state. The RU is not activated. Thereafter, the process of step S270 is performed.

In step S315a, the RU is activated in each of the small station 270S-1 to the small station 270S-N. The RU activates the transmission device and the reception device. Thereafter, the SSB search is performed in step S320.

In the present embodiment, an example of a case is described where the instruction for activation from the sleep state, the operation related setting, and the SSB setting are each transmitted from the CU 260 to the small station 270S, but this is not construed in a limiting sense. Two or more of the instruction activation from the sleep state, the operation related setting, and the SSB setting may be included in one message to be transmitted from the CU 260 to the small station 270S.

### (2) Second Embodiment

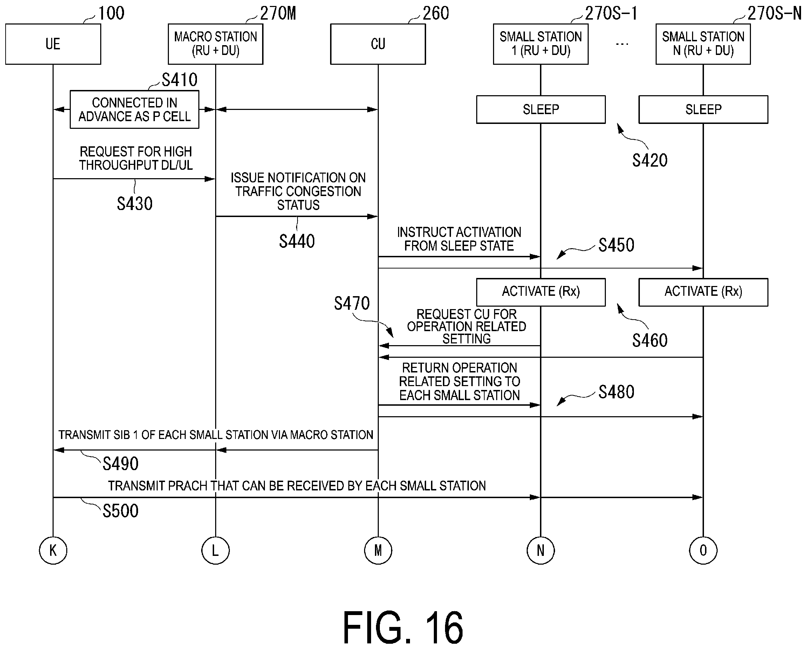

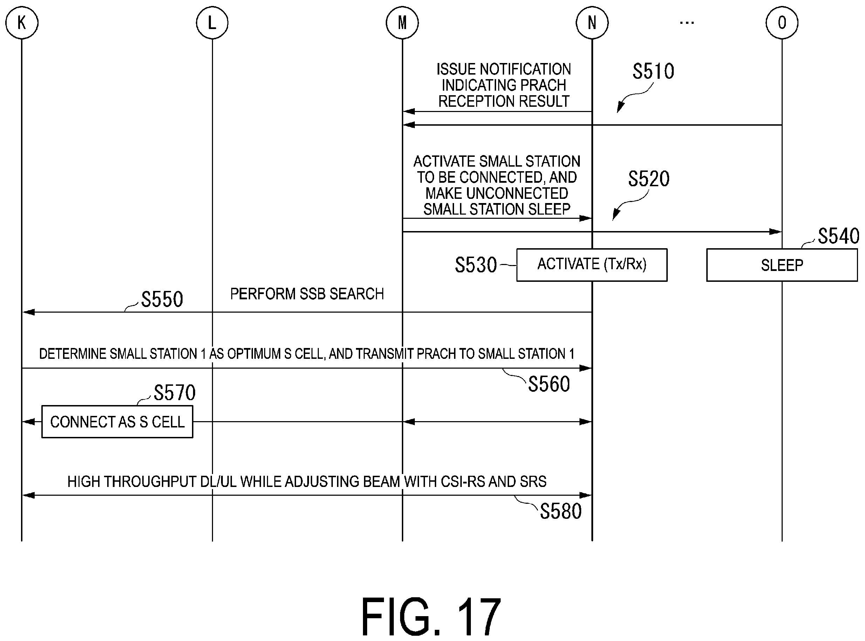

A second embodiment will be described with reference to FIGs. 16 and 17, focusing mainly on the differences from the first embodiment. In the second embodiment, the CU 260 transmits transmission frequency information indicating a transmission frequency of a PRACH to the second distributed unit to the UE 100 via a first distributed unit constituting a PCell. The macro station 270M is an example of the first distributed unit. The small station 270S is an example of the second distributed unit.

### (2.1) Exemplary system operation according to second embodiment

An exemplary system operation according to the second embodiment will be described with reference to FIGs. 16 and 17, focusing mainly on the differences from the first embodiment. Note that the processes of step S410 to step S450, step S470, step S540, step S570, step S580 are similar to the processes of step S10 to step S50, step S70, step S160, step S140 and step S170 in FIG. 9 and FIG. 10, and therefore descriptions thereof will be omitted.

In step S460, both the DU and the RU are activated in each of the small station 270S-1 to the small station 270S-N that have received the instruction for activation from the sleep state. The RU activates at least the reception device. Note that the RU may activate the transmission device together with the reception device. However, in order to suppress power consumption, it is preferable that only the reception device is activated and the transmission device is maintained in the sleep state at the timing when the small station 270S receives the instruction for activation from the sleep state.

In step S470, each of the small station 270S-1 to the small station 270S-N transmits a request for operation-related settings to the CU 260. Here, each of the small station 270S-1 to the small station 270S-N transmits a message indicating the activation thereof, and information of a receivable frequency band, to the CU 260, together with the request.

In step S480, the CU 260 transmits the operation related setting to each of the small station 270S-1 to the small station 270S-N. The CU 260 transmits the transmission frequency information included in the setting. The transmission frequency information is information indicating the transmission frequency of the PRACH requested to the UE 100. The CU 260 transmits transmission frequency information that is common among the plurality of small stations 270S to each of the plurality of small stations 270S.

In step S490, the CU 260 transmits the system information block (SIB) (for example, SIB 1) of each of the small station 270S-1 to the small station 270S-N to the UE 100 via the macro station 270M. The CU 260 transmits the transmission frequency information included in the SIB to the UE 100. Therefore, the CU 260 transmits the transmission frequency information to the UE 100 via the macro station 270M. Here, the transmission frequency information is the transmission frequency information transmitted to each of the small station 270S-1 to the small station 270S-N in step S480. Accordingly, the transmission frequency information indicates the transmission frequency of the PRACH that can be received by each of the small station 270S-1 to the small station 270S-N. The UE 100 receives the SIB including the transmission frequency information. Accordingly, the UE 100 receives information indicating the transmission frequency of the PRACH from the macro station 270M to the small station 270S.

Note that the CU 260 may transmit the transmission frequency information included in information other than the SIB, to the UE 100.

In step S500, the UE 100 transmits the PRACH that can be received by each of a plurality of small stations 270S to each of the plurality of small stations 270S. The small station 270S receives the PRACH from the UE 100. Here, each of the small station 270S-1 to the small station 270S-N receives the PRACH transmitted from the UE 100 with no application of a precoder. The transmission frequency of the PRACH is a transmission frequency indicated by the transmission frequency information. In other words, the transmission of the PRACH with no application of the precoder (that is, without precoding) means that the PRACH is emitted in all directions without forming a beam.

As described above, with the notification on the transmission frequency information indicating the transmission frequency of the PRACH issued in advance from the CU 260 to each of the small station 270S-1 to the small station 270S-N, as many small stations 270S as possible can receive the PRACHs of the same frequency. Thus, the number of times of PRACH transmission by the UE 100 can be reduced.

In step S510, each of the small station 270S-1 to the small station 270S-N notifies the CU 260 of the PRACH reception result. Accordingly, the small station 270S notifies the CU 260 of the PRACH reception result. The reception result of the PRACH is indicated by the received power of the PRACH. The CU 260 receives the PRACH reception result from the small station 270S-1 to the small station 270S-N.

Here, the CU 260 determines whether the small station 270S-1 to the small station 270S-N are connected to the UE 100 based on the reception result. For example, the CU 260 determines the small station 270S to be connected to the UE 100 based on the magnitude of the received power of the PRACH. The CU 260 determines that the small station 270S with the largest PRACH received power is to be connected to the UE 100.

As another example, the CU 260 may determine to connect a predetermined number of small stations 270S to the UE 100 in descending order of the received power. As another example, the CU 260 may determine that a small station 270S whose received power is equal to or greater than a threshold is to be connected to the UE 100.

Note that the CU 260 may determine the small station 270S to be connected to the UE 100 based on machine-learning. For this machine-learning, a trained model is used that has been trained to output the ranking of the small stations 270S to be connected to the UE 100, when the received power is input. The learning model is generated in advance and stored in the UE 100. Any type of machine-learning may be used as the machine-learning. The machine-learning is, for example, deep learning. A method such as transfer learning is preferably used for training the learning model for generating the trained model. The CU 260 may determine to connect a predetermined number of small stations 270S to the UE 100 in descending order of the rank output from the trained model.

Hereinafter, an example of a case will be described in which the CU 260 determines that the small station 270S-1 among the small station 270S-1 to the small station 270S-N is connected to the UE 100, and determines that the small station 270S-2 to the small station 270S-N are not connected to the UE 100.

In step S520, the CU 260 activates the small station 270S (small station 270S-1) that has been determined to be connected to the UE 100, and instructs the small stations 270S (the small station 270S-2 to the small station 270S-N) determined not to be connected to the UE 100 to transition to the sleep state. Accordingly, the CU 260 instructs the small station 270S, determined not to be connected to the UE 100 based on the PRACH reception result, to transition to the sleep state. The small station 270S-1 receives the activation instruction from the CU 260. Each of the small station 270S-2 to the small station 270S-N receives a sleep instruction from the CU 260.

In step S530, the RU activates the transmission device in the small station 270S-1 that has received the activation instruction. Thus, as a result, the transmission device and the reception device of the RU are in an activated state. If the transmission device has been activated in step S460, the process of step S530 is omitted.

In step S550, the UE 100 performs the SSB search. The small station 270S-1 that has not been instructed to transition to the sleep state emits the SSB beam. Accordingly, the small station 270S not instructed to transition to the sleep state transmits the SSB to the UE 100. Note that information (such as transmission period and beam configuration) for the small station 2705-1 to emit the SSB beams is set in advance. The UE 100 receives the SSB from the small station 270S-1.

In step S560, the UE 100 determines the cell of the small station 270S-1 as the optimal PSCell or SCell, and transmits the PRACH to the small station 270S-1. The small station 2705-1 receives the PRACH from the UE 100.

As described above, in the exemplary system operation according to the second embodiment, the UE 100 transmits the PRACH in each of step S500 and step S560. In the transmission of the PRACH in step S500, the UE 100 has not acquired information (such as the SSB index) necessary for the initial access process to the small station 270S. Therefore, as initial access processing to the small station 270S, the PRACH transmission is performed again in step S560, along with the SSB search. Note that, while the PRACH in step S500 is transmitted without precoding as described above, the PRACH in step S560 is transmitted after precoding is performed. That is, in step S560, the small station 270S-1 receives the PRACH with the precoder applied from the UE 100 that has received the SSB.

### (3) Third Embodiment

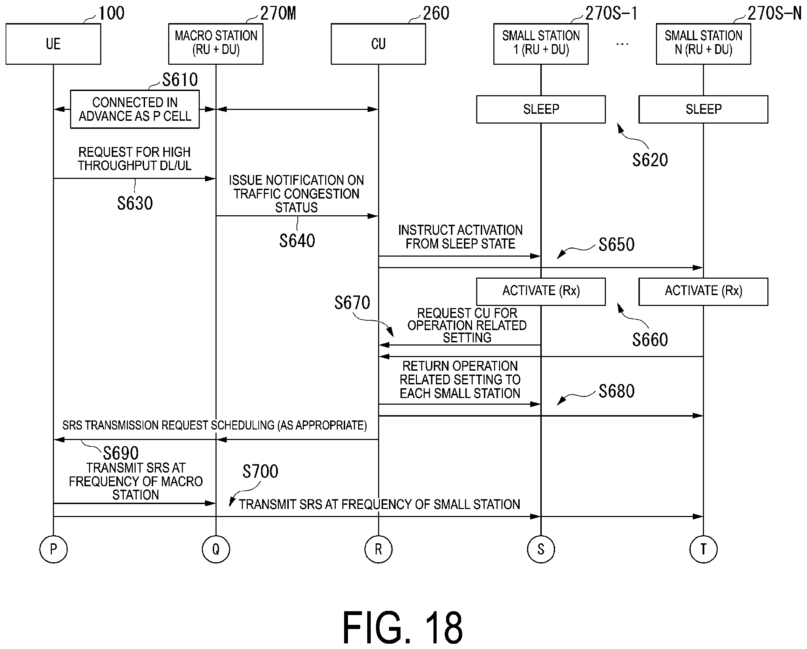

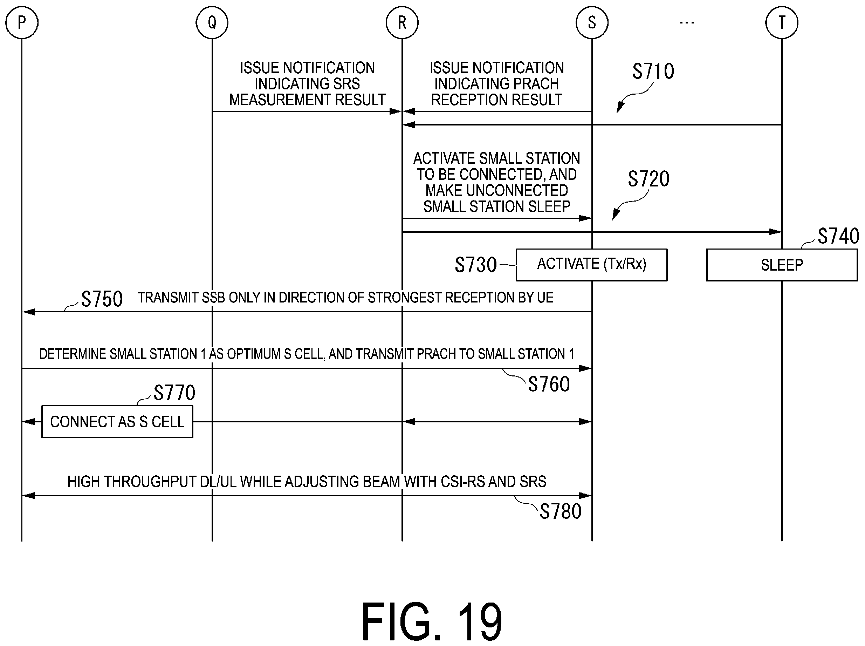

A third embodiment will be described with reference to FIGs. 18 and 19, focusing mainly on the differences from the second embodiment. In the third embodiment, the CU 260 requests the UE 100 for transmission of a reference signal to the second distributed unit via the first distributed unit constituting the PCell. The macro station 270M is an example of the first distributed unit. The small station 270S is an example of the second distributed unit.

### (3.1) Exemplary system operation according to third embodiment

An exemplary system operation according to the third embodiment will be described with reference to FIGs. 18 and 19, focusing mainly on the differences from the second embodiment. Note that the processes of step S610 to step S670, step S720 to step S780 are similar to the processes of step S410 to step S470 and step S520 to step S580 in FIGs. 16 and 17, and therefore description thereof will be omitted. The process of step S680 is similar to the process of step S80 in FIG. 9, and therefore a description thereof will be omitted.

In step S690, the CU 260 requests the UE 100 for transmission of SRS to each of the small station 270S-1 to the small station 270S-N, with the frequency of the SRS designated, via the macro station 270M. The UE 100 receives a request for SRS transmission from the macro station 270M to each of the small station 270S-1 to the small station 270S-N. Note that the macro station 270M may transmit the request included in the message to the UE 100 as appropriate.

Also, the CU 260 requests UE 100 for transmission of an SRS to the macro station 270M via the macro station 270M. The UE 100 accepts the request for the transmission of the SRS to the macro station 270M, from the macro station 270M. Note that the macro station 270M may transmit the request included in the message to the UE 100 as appropriate.

In step S700, the UE 100 transmits the SRS to each of the small station 270S-1 to the small station 270S-N and the macro station 270M. The UE 100 transmits the SRS to each of the small station 270S-1 to the small station 270S-N, and the SRS to the macro station 270M at the same time. The UE 100 transmits the SRS to each of the small station 270S-1 to the small station 270S-N at a frequency designated for each of the small station 270S-1 to the small station 270S-N. Each of the small station 270S-1 to the small station 270S-N receives the SRS from the UE 100. The UE 100 transmits the SRS to the macro station 270M at the frequency designated for the macro station 270M. The macro station 270M receives the SRS.

Here, the request for transmission of the SRS in step S690 is issued at a timing before the connection between the UE 100 and the small station 270S is established. Accordingly, the CU 260 requests the UE 100 for transmission of the SRS to the small station 270S via the macro station 270M at a timing before the connection establishment between the UE 100 and the small station 270S is executed.

The transmission of the SRS in step S700 occurs at a timing before the connection between the UE 100 and the small station 270S is established. Accordingly, the small station 270S is not yet synchronized with the UE 100, and even if the small station 270S receives the SRS, the distance between the UE 100 and the small station 270S (that is, the time difference between the SRS transmission by the UE 100 and SRS reception by the small station 270S) cannot be accurately measured. Therefore, the UE 100 also performs transmission and reception of the SRS to and from the macro station 270M with which connection has already been established, so that the reception time of SRS in the small station 270S can be calibrated by sharing the SRS transmission time measured in the SRS transmission and reception with the CU 260.

In step S710, each of the small station 270S-1 to the small station 270S-N notifies the CU 260 of the SRS reception result. Also, the macro station 270M notifies the CU 260 of the SRS reception result.

Here, the CU 260 determines whether the small station 270S-1 to the small station 270S-N are connected to the UE 100 based on the reception result. For example, the CU 260 determines the small station 270S to be connected to the UE 100 based on the magnitude of the received power of the SRS. The CU 260 performs channel estimation based on the SRS received by each of the small station 270S-1 to the small station 270S-N, and determines that the small station 270S having the largest SRS received power is to be connected to the UE 100.

As another example, the CU 260 may determine to connect a predetermined number of small stations 270S to the UE 100 in descending order of the received power. As another example, the CU 260 may determine that a small station 270S whose received power is equal to or greater than a threshold is to be connected to the UE 100.

Note that the CU 260 may determine the small station 270S to be connected to the UE 100 based on machine-learning, as described in the second embodiment.
The CU 260 may determine to connect a predetermined number of small stations 270S to the UE 100 in descending order of the rank output from the trained model.

Accordingly, in the process of step S720, the CU 260 instructs the small station 270S determined not to be connected to the UE 100 based on the SRS reception result by the small station 270S, to transition to the sleep state.
Hereinafter, an example of a case will be described in which the CU 260 determines that the small station 270S-1 among the small station 270S-1 to the small station 270S-N is connected to the UE 100, and determines that the small station 270S-2 to the small station 270S-N are not connected to the UE 100.

In step S750, the small station 270S-1 transmits the SSB only in the direction achieving the reception by the UE 100 with the largest power. The small station 270S-1 determines the direction based on the reception result of the SRS received in step S700. The UE 100 receives the SRS from the small station 2705-1.

In the SSB search in step S750, the SSB is transmitted only in the direction achieving the reception by the UE 100 with the largest power, and the SSB search is simplified as compared with the known SSB search. This is because the SRS has already been transmitted from the UE 100 to the small station 270S in step S700. Note that simplification of the SSB search means power saving and higher speed.

### (4) Fourth Embodiment

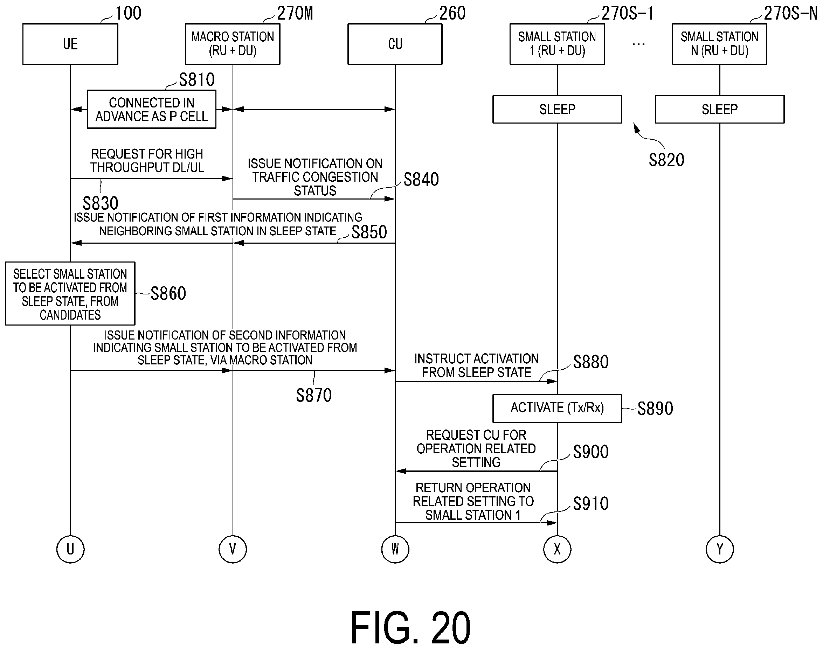

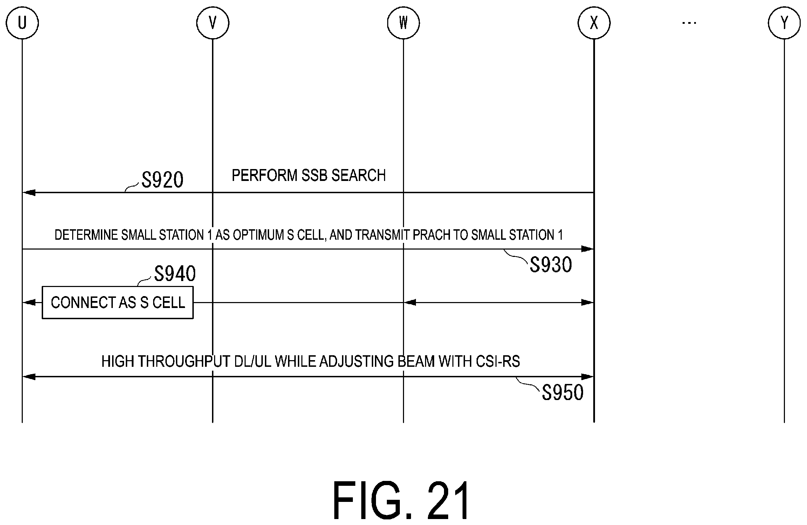

A fourth embodiment will be described with reference to FIGs. 20 and 21, focusing mainly on the differences from the first embodiment. In the fourth embodiment, the UE 100 is a user equipment that performs wireless communication with the master node and the secondary node using dual connectivity in a mobile communication system, and receives first information indicating a neighbour cell from the master node. The UE 100 selects the secondary node to be activated from the sleep state based on the first information. The UE 100 transmits second information indicating the neighbour cell to be activated from the sleep state by the UE 100, to the master node. The macro station 270M is an example of the master node. The small station 270S is an example of the secondary node.

### (4.1) Exemplary system operation according to fourth embodiment

An exemplary system operation according to the fourth embodiment will be described with reference to FIGs. 20 and 21, focusing mainly on the differences from the first embodiment. Note that the processes of step S810 to step S840 and step S930 to step S950 are similar to the processes of step S10 to step S40, step S130, step S140, and step S170 in FIGs. 9 and 10, and therefor description thereof will be omitted. The process of step S920 is similar to the process of step S550 in FIG. 17, and therefore a description thereof will be omitted.

In step S850, the CU 260 notifies the UE 100 of the first information via the macro station 270M. Therefore, the CU 260 transmits the first information to the UE 100. The first information indicates the small station 270S in the vicinity of the UE 100. Therefore, the first information is information of the secondary node in the sleep state. The small stations 270S in the sleep state in the vicinity of the UE 100 are the small station 270S-1 to the small station 270S-N. The UE 100 receives the first information from the macro station 270M.

Here, the transmission of the first information from the macro station 270M to the UE 100 is performed at a timing after the UE 100 transmits a request for the radio-quality condition to the macro station 270M in step S830. Thus, the UE 100 receives the first information from the macro station 270M, after the UE 100 has requested for high throughput communication.

In step S860, the UE 100 selects the small station 270S to be activated from the sleep state from among the candidates. Here, the UE 100 selects a small station 270S to be activated from the sleep state based on the connection history information. In the present embodiment, the UE 100 selects the small station 270S to be activated from the sleep state, based on the machine learning using the current position of the UE 100 and the connection history information.

The connection history information is information indicating a history of connection by the UE 100 in a predetermined period in the past (such as, for example, the most recent one month). The connection history information includes, for example, location and time information of the connection with the small station 270S connected from the UE 100 in the past, the identifier of the small station 270S connected in the past, and communication quality between the UE 100 and the small station 270S connected in the past. The location of the UE 100 connected to the small station 270S in the past is acquired based on, for example, the Global Positioning System (GPS). The identifier of the small station 270S connected in the past is, for example, the cell ID of the cell of the small station 270S.

The connection history information may include a daily movement pattern of the UE 100. The movement pattern is assumed to be a unique pattern for each day reflecting the daily behavior of the user of the UE 100.

The current position of the UE 100 is recognized based on, for example, above-described MDT, Timing Advance, Proximity Indication, or the like.

In the machine learning, a learning model is used that outputs a score for each small station 270S to be activated from the sleep state when the current position of the UE 100 and the connection history information are input. The learning model is generated in advance and stored in the UE 100. Any type of machine-learning may be used as the machine-learning. The machine-learning is, for example, deep learning. A method such as transfer learning is preferably used for training the learning model for generating the trained model.

The UE 100 generates the second information by assigning a high rank to the small station 270S as the small station 270S to be activated from the sleep state, in order from the small station 270S with the highest score output by the learning model. The second information indicates the small station 270S to be activated from the sleep state by the UE 100, according to the rank of the small station 270S.

In step S870, the UE 100 transmits, to the CU 260, the second information indicating the small station 270S to be activated from the sleep state by the UE 100, via the macro station 270M. Accordingly, the UE 100 transmits the second information indicating the small station 270S to be activated from the sleep state by the UE 100, to the macro station 270M. The CU 260 receives the second information from the UE 100 via the macro station 270M.

In step S880, the CU 260 instructs the small station 270S to be activated from the sleep state. The CU 260 instructs the small station 270S indicated by the second information to be activated from the sleep state. The CU 260 determines whether the activation is possible in order from the small station 270S with the highest rank indicated by the second information. When the CU 260 determines that a small station 270S of a certain rank can be activated, the base station stops the determination process for the subsequent ranks. Note that the CU 260 acquires in advance information indicating whether the small station 270S can be activated. The CU 260 instructs the small station 270S, determined to be activatable, to be activated from the sleep state.

Note that, as described above, when the macro station 27 receives the second information from the UE 100, the second information is transmitted to the CU 260 via the macro station 270M, and the CU 260 instructs the small station 270S to be activated from the sleep state. Accordingly, the macro station 270M activates the small station 270S when the second information is received.

Hereinafter, an example of a case will be described in which the CU 260 determines that the small station 270S-1 among the small station 270S-1 to the small station 270S-N is connected to the UE 100, and determines that the small station 270S-2 to the small station 270S-N are not connected to the UE 100.

In step S880, the CU 260 instructs the small station 270S-1 to be activated from the sleep state. Accordingly, the CU 260 activates the neighbour cell from the sleep state, based on the second information received from the UE 100. The small station 270S-1 receives the instruction for activation from the sleep state from the CU 260.

In step S890, both the DU and the RU are activated in the small station 270S-1 that has received the instruction for activation from the sleep state. The RU activates the transmission device and the reception device.

In step S900, the small station 270S-1 transmits a request for operation related setting to the CU 260. The small station 270S-1 transmits the request, for example, included in an F1 SETUP REQUEST message.

In step S910, the CU 260 transmits the operation related setting to the small station 270S-1. The CU 260 transmits the settings, for example, included in an F1 SETUP RESPONSE message.

Note that, in the fourth embodiment, an example of a case where machine-learning is used in the process of selecting the small station 270S to be activated from the sleep state is described, but this is not construed in a limiting sense. In this process, a table may be used instead of machine learning. As the table, for example, a table is used in which a set of the current position of the UE 100 and the connection history information is associated with a set of scores for each small station 270S to be activated from the sleep state.

In the second embodiment, the third embodiment, and the fourth embodiment described above, an example of a case is described where the instruction for activation from the sleep state and the operation related setting, are each transmitted from the CU 260 to the small station 270S, but this is not construed in a limiting sense. The instruction for activation from the sleep state and the operation related setting may be included in one message to be transmitted from the CU 260 to the small station 270S.

In the exemplary system operation according to each of the embodiments described above, an example of a case is described where the macro station 270M is included in the MN 200M and the small station 270S is included in the SN 200S. That is, although an example of a case is described where the macro station 270M and the small station 270S belong to different cell groups, this is not construed in a limiting sense. The macro station 270M and the small station 270S may belong to the same cell group. For example, the macro station 270M and the small station 270S may be included in the MN 200M. The exemplary system operation according to each of the embodiments described above may be implemented in a case where the macro station 270M and the small station 270S belong to the same cell group.

A program may be provided that causes a computer (the UE 100 and the node 200) to execute the operations according to the above-described embodiments. The program may be recorded in a computer-readable medium. Use of the computer-readable medium enables the program to be installed on a computer. Here, the computer-readable medium on which the program is recorded may be a non-transitory recording medium. The non-transitory recording medium is not particularly limited, but may be, for example, a recording medium such as a CD-ROM or a DVD-ROM. A circuit that executes each process performed by the UE 100 or the node 200 may be integrated, and at least a part of the UE 100 or the node 200 may be configured as a semiconductor integrated circuit (chip set or System on Chip (SoC)).

The above-described embodiment has described an example in which the node 200 is an NR base station (i.e., a gNB). However, the node 200 may be an LTE base station (i.e., an eNB) or a 6G base station. The node 200 may be a relay node such as an Integrated Access and Backhaul (IAB) node. The node 200 may be a DU of the IAB node. The UE 100 may be a Mobile Termination (MT) of the IAB node.

The term "node" mainly means a base station, but may also mean a core network apparatus or a part (CU, DU, or a radio unit (RU)) of the base station. The node may include a combination of at least a part of the apparatus of the core network and at least a part of the base station.

Although one embodiment of the present invention has been described in detail above with reference to the drawings, the specific configuration is not limited to the above, and various design changes, and the like are possible within the scope that does not deviate from the gist of the present invention.

### REFERENCE SIGNS

1: Network
10: RAN
20: CN
100: UE
110: Receiver
120: Transmitter
130: Controller
140: Wireless communicator
200: Node
210: Transmitter
220: Receiver
230: Controller
240: NW communicator
250: Wireless communicator
300: CN apparatus

## Claims

1. A user equipment configured to perform wireless communication with a master node and a secondary node by using dual connectivity in a mobile communication system, the user equipment:
receiving first information indicating a neighbour cell from the master node;
selecting the secondary node to be activated from a sleep state based on the first information; and
transmitting second information indicating a neighbour cell to be activated by the user equipment, to the master node.

2. The user equipment according to claim **1,** wherein the user equipment receives the first information from the master node after requesting for high-throughput communication.

3. The user equipment according to claim 1 or 2, wherein the first information is information on the secondary node in the sleep state.

4. The user equipment according to any one of claims 1 to 3, wherein the secondary node to be activated from the sleep state is selected based on connection history information.

5. The user equipment according to claim 4, wherein the connection history information comprises:
information on a location and time of connection with the secondary node connected with the user equipment in past,
an identifier of the secondary node connected in the past, and
a quality of communication between the user equipment and the secondary node connected in the past.

6. The user equipment according to any one of claims 1 to 5, the master node activates the secondary node upon receiving the second information.

7. A node configured to operate in a mobile communication system in which a user equipment performs wireless communication using dual connectivity, the node:
transmitting first information indicating a neighbour cell to the user equipment;
receiving, from the user equipment, second information indicating a neighbour cell to be activated by the user equipment; and
activating the neighbour cell based on the received second information.

8. A communication method used by a user equipment configured to perform wireless communication with a master node and a secondary node by using dual connectivity in a mobile communication system, the method comprising:
receiving first information indicating a neighbour cell from the master node;
selecting the secondary node to be activated from a sleep state based on the first information; and
transmitting second information indicating a neighbour cell to be activated by the user equipment, to the master node.

9. A communication method used by a node configured to perform wireless communication with a user equipment using dual connectivity in a mobile communication system, the method comprising:
transmitting first information indicating a neighbour cell to the user equipment;
receiving, from the user equipment, second information indicating a neighbour cell to be activated by the user equipment; and
activating the neighbour cell based on the received second information.
